# EUROPÄISCHE PATENTSCHRIFT

(11) **EP 0 666 241 B1**
(45) Veröffentlichungstag und Bekanntmachung des Hinweises auf die Patenterteilung: **29.12.1997**
(21) Anmeldenummer: 95101032.1
(22) Anmeldetag: 26.01.1995
(51) Int. Cl.: C01B 21/14

(54) **Verfahren zur Herstellung von Hydroxylammoniumsalzen**
Process for the preparation of hydroxylamine salts
Procédé de préparation de sels d'hydroxylamine

(30) Priorität: 04.02.1994 DE 4403479
(43) Veröffentlichungstag der Anmeldung: 09.08.1995
(73) Patentinhaber: BASF AKTIENGESELLSCHAFT, 67056 Ludwigshafen (DE)
(72) Erfinder: Schneider, Heinz-Walter, Dr., D-67069 Ludwigshafen (DE); Wilms, Axel, Dr., D-67256 Weisenheim (DE); Schmitz, Rüdiger, D-67245 Lambsheim (DE); Schulz, Robert, D-68623 Lampertheim (DE); Michelsen, Klaus, Dr., D-22395 Hamburg (DE)

(56) Entgegenhaltungen:
- EP-A- 0 467 174
- DE-C- 956 038

## Beschreibung

Die vorliegende Erfindung betrifft ein verbessertes Verfahren zur Herstellung von Hydroxylammoniumsalzen durch katalytische Reduktion von Stickstoffmonoxid mit Wasserstoff in Gegenwart eines Hydrierkatalysators.

Verfahren zur Herstellung von Hydroxylammoniumsalzen sind beispielsweise aus der DE-PS 956 038 und der DE-A 4022851 bekannt. Für die Beurteilung der Wirtschaftlichkeit eines Verfahrens ist neben Umsatz und Selektivität auch die Raum-Zeit-Ausbeute von großer Bedeutung. Die Raum-Zeit-Ausbeute bisher bekannter Verfahren zur Herstellung von Hydroxylammoniumsalzen ist jedoch nicht befriedigend.

Aufgabe der vorliegenden Erfindung war es daher, ein verbessertes Verfahren zur Herstellung von Hydroxylammoniumsalzen durch katalytische Reduktion von Stickstoffmonoxid mit Wasserstoff in Gegenwart eines Hydrierkatalysators zur Verfügung zu stellen, das gegenüber bekannten Verfahren eine verbesserte Raum-Zeit-Ausbeute und eine höhere Selektivität aufweist sowie weniger Distickstoffmonoxid produziert.

Demgemäß wurde ein verbessertes Verfahren zur Herstellung von Hydroxylammoniumsalzen durch katalytische Reduktion von Stickstoffmonoxid mit Wasserstoff in Gegenwart eines Hydrierkatalysators gefunden, indem man
- (a): die nach der Reaktion erhaltene Reaktionsmischung in einem ersten Schritt filtriert, unter Erhalt einer Lösung von im wesentlichen Hydroxylammoniumsalz und eines Filterrückstandes, enthaltend im wesentlichen eine Mischung aus Hydrierkatalysator und einer Lösung von im wesentlichen Hydroxylammoniumsalz, und
- (b): in einem zweiten Schritt den Filterrückstand der Sedimentation zur Anreicherung des Hydrierkatalysators unterwirft, unter Erhalt einer Mischung, enthaltend einen höheren Gehalt an Hydrierkatalysator als der Filterrückstand und einer Mischung, enthaltend einen niedrigeren Gehalt an Hydrierkatalysator als der Filterrückstand.

Im allgemeinen stellt man Hydroxylammoniumsalze nach bekannten Verfahren, die beispielsweise aus der DE-A 956 038 und der DE-A 4,022,851 bekannt sind, aus Stickstoffmonoxid mit Wasserstoff in verdünnter wäßriger Säure in Gegenwart von suspendierten Platinträgerkatalysatoren bei erhöhter Temperatur und erhöhtem Druck zu Hydroxylammoniumsalzen her.

In der Regel hält man bei der Herstellung der Hydroxylammoniumsalze ein Molverhältnis von Wasserstoff zu Stickstoffmonoxid von 1,5 :1 bis 6:1, bevorzugt von 3:1 bis 5:1, ein. Besonders gute Ergebnisse erhält man nach den bisherigen Beobachtungen, wenn man darauf achtet, daß in der Reaktionszone ein Molverhältnis von Wasserstoff zu Stickstoffmonoxid von 3,5:1 bis 5:1 aufrecht erhalten wird.

Vorteilhaft verwendet man als Säuren starke Mineralsäuren wie Schwefelsäure, Salpetersäure oder Phosphorsäure, besonders bevorzugt Schwefelsäure. Geeignet sind im allgemeinen auch saure Salze wie Ammoniumbisulfat. In der Regel verwendet man 4 bis 6 normale wäßrige Säuren und läßt üblicherweise im Verlauf der Reaktion die Säurekonzentration nicht unter 0,2 normal absinken.

Die Hydrierung von Stickstoffmonoxid führt man im allgemeinen bei einer Temperatur im Bereich von 30 bis 80, vorzugsweise von 35 bis 60°C, aus. Des weiteren wählt man den Druck während der Hydrierung üblicherweise im Bereich von 1 bis 30, vorzugsweise von 1,5 bis 20 bar (absolut).

Das Verhältnis von Mineralsäure zu Katalysator hängt in der Regel vom verwendeten Katalysator ab. Vorzugsweise verwendet man als Katalysatoren Platin-haltige Katalysatoren, die üblicherweise partiell mit Schwefel, Selen, Arsen oder Tellur vergiftet sind. Des weiteren sind diese Katalysatoren in der Regel auf einen Träger aufgebracht (s. DE-PS 956 038 und DE-A 4,022,851).

Als bevorzugte Katalysatoren verwendet man Platin in Verbindung mit einem Trägermaterial aus Kohlenstoff. Vorzugsweise wählt man hierbei das Verhältnis von Mineralsäure zu Katalysator im Bereich von 10 bis 100, bevorzugt von 30 bis 80 g Platin-Kohlenstoff-Katalysator je Liter Mineralsäure. Das Molverhältnis von Kohlenstoff, vorzugsweise Graphit und Aktivkohle, zu Platin wählt man hierbei im allgemeinen im Bereich von 99,99 bis 10 Mol-%, bevorzugt 99,99 bis 30 Mol-%, besonders bevorzugt von 99,98 bis 95 Mol-%.

In einer besonderen Ausführungsform behandelt man den Katalysator vor der Hydrierung in saurer Lösung, zweckmäßig in der Mineralsäure, in der die Hydrierung durchgeführt werden soll, mit Wasserstoff ("Aktivierung").

Je nach eingesetzter Mineralsäure erhält man die entsprechenden Hydroxylammoniumsalze wie Hydroxylammoniumsulfat, Hydroxylammoniumnitrat, Hydroxylammoniumphosphat, bevorzugt Hydroxylammmoniumsulfat.

In einer bevorzugten Ausführungsform stellt man als Hydroxylammoniumsalz Hydroxylammoniumsulfat in Kaskadenfahrweise her. Hierbei werden in der Regel 2 bis 10, vorzugsweise 4 bis 8, Rührkessel miteinander in Kaskadenschaltung, d.h. in Reihe, verbunden. Dem ersten Rührkessel werden im allgemeinen stündlich von 4 bis 12, vorzugsweise von 7 bis 10 m³, einer 3 bis 6, vorzugsweise 4 bis 5 n Schwefelsäure zusammen mit von 0,5 bis 6, vorzugsweise von 0,5 bis 4,5, besonders bevorzugt von 0,5 bis 2 m³ Hydroxylaminlösung in einer Konzentration im Bereich von 50 bis 150, bevorzugt von 100 bis 130 g/l und mit von 10 bis 100, vorzugsweise von 20 bis 50 g/l Platin-Graphit-Katalysator mit einem Gehalt von 0,5 Gew.-% Platin zugeführt.

In den Rührkesseln hält man üblicherweise eine Temperatur im Bereich von 30 bis 60, vorzugsweise von 40 bis 50°C und einen Druck im Bereich von 1 bis 5, vorzugsweise von 1 bis 3 bar (absolut) aufrecht.

Die Stoffmenge, die dem ersten Rührkessel zugeführt wird, zuzüglich der Stoffmenge, die durch Reaktion der gasförmigen Einsatzstoffe in den Rührkesseln gebildet wird, wird zweckmäßig dem letzten Rührkessel, enthaltend im wesentlichen Hydroxylammoniumsulfat und suspendierten Hydrierkatalysator, entnommen.

Vorzugsweise führt man Stickstoffmonoxid und Wasserstoff jedem Rührkessel zu. Dabei kann man Stickstoffmonoxid und Wasserstoff getrennt oder gemischt zuführen. Üblicherweise liegt die Gesamtmenge an Stickstoffmonoxid im Bereich von 400 bis 1200, vorzugsweise von 600 bis 800 m³/h, die Gesamtmenge an Wasserstoff m Bereich von 800 bis 3000, vorzugsweise von 1000 bis 2000 m³/h. Im allgemeinen führt man dem ersten Rührkessel am meisten, dem letzten Rührkesel am wenigsten Stickstoffmonoxid und Wasserstoff zu. Die gegebenenfalls dazwischenliegenden Rührkessel erhalten im allgemeinen ihrer Reihenfolge entsprechend weniger als der direkt vorgeschaltete und mehr als der direkt nachgeschaltete Rührkessel Stickstoffmonoxid und Wasserstoff.

Üblicherweise sammelt man bei der Rührkessel-Variante die am letzten Rührkessel entnommene Hydroxylammoniumsulfat-enthaltende Mischung in einem Zwischenbehälter. Der Reaktionsaustrag enthält im allgemeinen Hydroxylammoniumsulfat in einer Konzentration von 50 bis 140, vorzugsweise von 110 bis 130 g/l (gerechnet als Hydroxylamin), Ammoniumsulfat in einer Konzentration im Bereich von 3 bis 80, vorzugsweise von 15 bis 25 g/l, Schwefelsäure in einer Konzentration im Bereich von 3 bis 100, vorzugsweise von 10 bis 20 g/l sowie Reaktionsabgase. Die Gesamtmenge an Reaktionsabgas liegt üblicherweise im Bereich von 100 bis 800 m³/h, vorzugsweise von 200 bis 700 m³/h. Das Reaktionsabgas enthält von 1 bis 30, vorzugsweise 3 bis 20 Vol.-% Stickstoffmonoxid, von 55 bis 98, vorzugsweise 58 bis 85 Vol.-% Wasserstoff und 1 bis 18, vorzugsweise 2 bis 16 Vol.-% Distickstoffmonoxid.

Die Reaktion kann man auch diskontinuierlich durchführen, wobei unter ansonsten gleichen Bedingungen die Reaktionszeiten üblicherweise im Bereich von 4 bis 8 h liegen.

Im Anschluß an die Reaktion trennt man den Hydrierkatalysator mit üblichen Filtriermethoden aus der Mischung, die sich im Zwischenbehälter befindet, ab, beispielsweise mittels eines Kerzenfilters. In einer bevorzugten Ausführungsform filtriert man mittels Kerzenfilter durch Erzeugen einer Druckdifferenz an den Kerzen in an sich bekannter Weise im Bereich von 200 bis 20 000, bevorzugt von 200 bis 2000 mbar.

Die Zusammensetzung des Filterrückstandes und des Filtrats hängt im wesentlichen vom eingesetzten Filter ab. In der Regel wählt man das Gewichtsverhältnis von Filterrückstand zu Filtrat im Bereich von 1:1,5 bis 1:5, bevorzugt von 1:2 bis 1:4. Der Filterrückstand besteht im allgemeinen aus von 6 bis 16, vorzugsweise von 8 bis 13 Gew.-% aus dem Hydrierkatalysator und zu von 84 bis 94, vorzugsweise von 87 bis 92 Gew.-% aus einer Lösung bestehend aus im wesentlichen Hydroxylammoniumsulfat, das in der Regel in einer Konzentration von 50 bis 140, vorzugsweise von 110 bis 130 g/l (gerechnet als Hydroxylamin) vorliegt, Ammoniumsulfat, üblicherweise vorliegend in einer Konzentration im Bereich von 3 bis 80, vorzugsweise von 15 bis 25 g/l, und Schwefelsäure im allgemeinen vorliegend in einer Konzentration im Bereich von 3 bis 100, vorzugsweise von 10 bis 20 g/l.

Das Filtrat wird im allgemeinen wie üblich aufgearbeitet bzw. überwiegend eingesetzt zur Herstellung von Cyclohexanonoxim, das wiederum als Vorprodukt für Caprolactam dient.

Zur weiteren Aufarbeitung des Filterrückstandes verwendet man erfindungsgemäß die Sedimentation. Hierzu läßt man den Filterrückstand, der in der Regel als Suspension anfällt, zweckmäßig im Filtrationsbehälter absetzen. Die Dauer des Absetzvorganges hängt natürlich von der Größe des gewählten Behälters und der Sedimentationsgeschwindigkeit der unterschiedlichen Teilchen ab. Nach den bisherigen Beobachtungen haben sich Absetzzeiten von 0,5 bis 10 min, vorzugsweise von 2 bis 5 min, bewährt. Kürzere Zeiten zeigen üblicherweise keine Unterschiede zur bisherigen Verfahrensweise und längere Zeiten bringen in der Regel keine wesentlichen Vorteile mehr. Natürlich kann man die Sedimentation auch in einem anderen Behälter durchführen, wozu allerdings eine Überführung erforderlich wäre.

Die Temperatur bei der Sedimentation wählt man in der Regel im Bereich von 20 bis 70, vorzugsweise von 30 bis 50°C, wobei man üblicherweise bei Normaldruck, d.h. im Bereich von 90 bis 110 kPa, arbeitet.

Nach dem Sedimentationsvorgang trennt man in der Regel von 30 bis 85, vorzugsweise von 40 bis 70 Gew.-%, bezogen auf die Gesamtmenge des Filterrückstandes, der überstehenden Lösung ab und vereinigt sie in einer bevorzugten Ausführungsform mit dem Reaktionsaustrag vor dem Filtriervorgang. Die überstehende Lösung weist einen niedrigeren Gehalt an Hydrierkatalysator auf als vor dem Sedimentationsvorgang. Die Konzentration des Hydrierkatalysators in der überstehenden Lösung liegt üblicherweise im Bereich von 0 bis 5, vorzugsweise von 1 bis 4 g/l.

Die nach dem Abtrennen der überstehenden Lösung verbleibende Suspension weist einen höheren Gehalt an Hydrierkatalysator auf als vor der Sedimentation. Die Konzentration des Hydrierkatalysators der verbleibenden Suspension liegt üblicherweise im Bereich von 200 bis 400, vorzugsweise von 220 bis 350 g/l. Die nach der Sedimentation verbleibende Suspension setzt man zweckmäßig wieder zur Herstellung von Hydroxylammmoniumsalzen ein. In einer bevorzugten Ausführungsform setzt man sie zu Beginn der Reaktion in den ersten Rührkessel bei der kontinuierlichen Kaskadenfahrweise ein.

Das erfindungsgemäße Verfahren hat gegenüber den weiter oben genannten bekannten Verfahren den Vorteil einen höheren Raum- Zeit-Ausbeute. Des weiteren wird im erfindungsgemäßen Verfahren weniger Distickstoffmonoxid produziert als in den bekannten Verfahren, was die Selektivität erhöht und den Verbrauch an Stickstoffmonoxid senkt.

### Beispiele

Die Gasanalysen wurden mittels IR-Spektroskopie durchgeführt. Die Zusammensetzungen der Lösungen und Suspensionen wurden titrimetrisch und gravimetrisch bestimmt.

### Beispiel

In den ersten Rührkessel einer aus sechs Rührkesseln bestehenden Kaskade mit einem Volumen von je 20 m³ wurden stündlich bei 40°C und 1,5 bar (absolut) 8,9 m³ 4,5 n Schwefelsäure, 360 kg Platinkatalysator, erhalten aus der Produkt-Filtration (s.u.), (0,5 Gew.-% Platin auf Graphit; die Herstellung erfolgte analog zu der in Beispiel 1 der DE-PS 1088037 beschriebenen Vorgehensweise) sowie 920 kg Produktlösung aus der Filtration (Zusammensetzung: siehe Filtrat) zugeführt. Gleichzeitig wurden am letzten Reaktionskessel stündlich 10,5 m³ Reaktionsaustrag mit 1250 kg Hydroxylammoniumsulfat (berechnet als Hydroxylamin) und 142 kg Ammoniumsulfat sowie 160 kg Schwefelsäure (berechnet als wasserfreie Schwefelsäure) in einer Konzentration von 15 g H₂SO₄ pro Liter und 360 kg Platinkatalysator ausgetragen. Des weiteren wurden dem ersten bis sechsten Rührkessel stündlich bei 40°C und 1,5 bar (absolut) insgesamt 920 m³ Stickstoffmonoxid und 1570 m³ Wasserstoff zugeführt.

Der Reaktionsaustrag des letzten Kessels wurde in einem Vorlagebehälter für die Filtration gesammelt. Der Reaktionsaustrag aus dem Vorlagebehälter wurde mit zwei parallel geschalteten Kerzenfiltern (Fa. Schumacher) filtriert. Der Durchmesser eines Kerzenfilters betrug 1300 mm, die Höhe 1600 mm, und der Inhalt eines leeren Filtergehäuses 1860 l. Ein Kerzenfilter enthielt 169 poröse (Porendurchmesser: 60 µm) Polyethylen-Filterkerzen (Innendurchmesser einer Kerze: 40 mm, Außendurchmesser: 70 mm, Länge: 1100 mm). Die Druckdifferenz an den Polyethylen-Filterkerzen betrug 1000 mbar. Pro Stunde wurden die Kerzenfilter zweimal in an sich bekannter Weise mit Reaktionsaustrag beladen und rückgespült. Die Temperatur bei der Filtration betrug 40°C. Bei einem Filtrationsvorgang (2x je Stunde) wurde je Kerzenfilter 2790 kg Filtrat und 1030 kg eines Filterrückstandes erhalten. Der Filterrückstand bestand aus 9 Gew.-% aus dem Hydrierkatalysator und zu 91 Gew.-% aus einer Lösung bestehend aus im wesentlichen Hydroxylammoniumsulfat, das in einer Konzentration von 119 g/l (gerechnet als Hydroxylamin) vorlag, Ammoniumsulfat, das in einer Konzentration von 14 g/l, und Schwefelsäure, die in einer Konzentration von 15 g/l vorlag.

Der Filterrückstand wurde im Filtrationsbehälter während 5 min absitzen gelassen. Danach wurden in jedem Filter 600 l der überstehenden Lösung entfernt und mit dem Reaktionsaustrag im Vorlagebehälter vor der Filtration vereinigt. Die Zusammensetzung der überstehenden Lösung entsprach der Zusammensetzung des Filtrats, wobei 600 l Lösung noch 10 kg an nicht sedimentierten Katalysator enthielten. Die verbliebene Suspension (bestehend aus 230 kg Lösung und 90 kg Katalysator je Kerzenfilter) wurde in den ersten Rührkessel zurückgeführt.

Ferner fielen stündlich 400 m³ Abgas, bestehend aus 64 Vol.-% Wasserstoff, 11,8 Vol.-% Stickstoffmonoxid, 12,8 Vol.-% Distickstoffmonoxid und 11,4 Vol.-% Stickstoff, an. Demnach wurden 11,1 % des eingesetzten Stickstoffmonoxids zu Distickstoffmonoxid umgesetzt.

### Vergleichsbeispiel

Der folgende Vergleichsversuch wurde unter weitgehend gleichen Randbedingungen wie das erfindungsgemäße Beispiel durchgeführt. Die Gasbelastung wurde so eingestellt, daß annähernd identische Abgasmengen wie im erfindungsgemäßen Beispiel erhalten wurden. Im einzelnen:

In den ersten Rührkessel einer aus sechs Rührkesseln bestehenden Kaskade mit einem Volumen von je 20 m³ wurden stündlich bei 40°C und 1,5 bar (absolut) 7,8 m³ 4,5 n Schwefelsäure und 360 kg Platinkatalysator (0,5 Gew.-% Platin auf Graphit, gleicher Katalysator wie im oben genannten Beispiel) zugeführt. Zusammen mit dem Katalysator wurden stündlich 3740 kg Produktlösung aus der Filtration in den ersten Kessel geleitet (Zusammensetzung: siehe Filtrat). Gleichzeitig wurden am letzten Reaktionskessel stündlich 11,7 m³ Reaktionsaustrag mit 1340 kg Hydroxylammoniumsulfat (berechnet als Hydroxylamin) und 160 kg Ammoniumsulfat sowie 170 kg Schwefelsäure (berechnet als wasserfreie Schwefelsäure) in einer Konzentration von 15 g H₂SO₄ pro Liter und 360 kg Platinkatalysator ausgetragen. Des weiteren wurden dem ersten bis sechsten Rührkessel stündlich bei 40°C und 1,5 bar (absolut) insgesamt 790 m³ Stickstoffmonoxid und 1360 m³ Wasserstoff zugeführt.

Wie im erfindungsgemäßen Beispiel wurden pro Stunde 2 Filtrationszyklen durchgeführt und 2 parallel geschaltete Kerzenfilter eingesetzt, die mit den oben genannten identisch waren. Die Druckdifferenz betrug ebenfalls 1000 mbar, die Temperatur 40°C. Pro Filtrationszyklus und Kerzenfilter wurden jeweils 2440 kg Filtrat und 1030 kg eines Filterrückstandes erhalten. Der Filterrückstand bestand aus 9 Gew.-% aus dem Hydrierkatalysator und zu 91 Gew.-% aus einer Lösung bestehend aus im wesentlichen Hydroxylammoniumsulfat, das in einer Konzentration von 116 g/l (gerechnet als Hydroxylamin) vorlag, Ammoniumsulfat, das in einer Konzentration von 14 g/l, und Schwefelsäure, die in einer Konzentration von 15 g/l vorlag.

Die Suspension mit dem Filterrückstand (insgesamt für beide Filter zusammen 3350 l/h) wurde im Gegensatz zu obigem Beispiel nicht absitzen gelassen, sondern gleich in den ersten Rührkessel zurückgeführt.

Ferner fielen stündlich 400 m³ Abgas, bestehend aus 67 Vol.-% Wasserstoff, 8,5 Vol.-% Stickstoffmonoxid, 13,0 Vol.-% Distickstoffmonoxid und 11,5 Vol.-% Stickstoff, an. Demnach wurden 13,2 % des eingesetzten Stickstoffmonoxids zu Distickstoffmonoxid umgesetzt.

Die beiden Beispiele belegen, daß die Sedimentation des Filterrückstandes eine Steigerung der Raum-Zeit-Ausbeute um 1,6 kg Hydroxylamin pro m³ Reaktionsraum und Stunde auf einen Wert von 9,6 kg Hydroxylamin pro m³ Reaktionsraum und Stunde bewirkte.

Weiterhin belegen die Beispiele eine Verringerung der Menge an eingesetztem Stickstoffmonoxid (erfindungsgemäß: 80,0 m³ Stickstoffmonoxid pro kg Hydroxylamin und Stunde; Vergleich: 82,4 m³ Stickstoffmonoxid pro kg Hydroxylamin und Stunde) sowie eine Verringerung der Menge an gebildetem Distickstoffmonoxid.

## Patentansprüche

1. Verfahren zur Herstellung von Hydroxylammoniumsalzen durch katalytische Reduktion von Stickstoffmonoxid mit Wasserstoff in Gegenwart eines Hydrierkatalysators, dadurch gekennzeichnet, daß man
(a) die nach der Reaktion erhaltene Reaktionsmischung in einem ersten Schritt filtriert, unter Erhalt einer Lösung von im wesentlichen Hydroxylammoniumsalz und eines Filterrückstandes, enthaltend im wesentlichen eine Mischung aus Hydrierkatalysator und einer Lösung von im wesentlichen Hydroxylammoniumsalz, und
(b) in einem zweiten Schritt den Filterrückstand der Sedimentation zur Anreicherung des Hydrierkatalysators unterwirft, unter Erhalt einer Mischung, enthaltend einen höheren Gehalt an Hydrierkatalysator als der Filterrückstand und einer Mischung, enthaltend einen niedrigeren Gehalt an Hydrierkatalysator als der Filterrückstand.

2. Verfahren nach Anspruch 1, dadurch gekennzeichnet, daß die Mischung mit einem niedrigeren Gehalt an Hydrierkatalysator aus Schritt (b) im wesentlichen Hydroxylammoniumsalz enthält.

3. Verfahren nach Anspruch 1 oder 2, dadurch gekennzeichnet, daß man die Mischung mit einem niedrigeren Gehalt an Hydrierkatalysator aus Schritt (b) mit der nach der Reaktion erhaltenen Reaktionsmischung vor der Filtration vereinigt.

4. Verfahren nach Anspruch 1 bis 3, dadurch gekennzeichnet, daß man die Mischung aus Schritt (b) mit einem höheren Gehalt an Hydrierkatalysator zur Herstellung von Hydroxylammoniumsalzen einsetzt.

5. Verfahren nach Anspruch 4, dadurch gekennzeichnet, daß man die Mischung zu Beginn der Reaktion einsetzt.

6. Verfahren nach den Ansprüchen 1 bis 5, dadurch gekennzeichnet, daß das Hydroxylammoniumsalz Hydroxylammoniumsulfat ist. Verfahren zur Herstellung von Hydroxylammoniumsalzen
Zusammenfassung
Herstellung von Hydroxylammoniumsalzen durch katalytische Reduktion von Stickstoffmonoxid mit Wasserstoff in Gegenwart eines Hydrierkatalysators, indem man
(a) die nach der Reaktion erhaltene Reaktionsmischung in einem ersten Schritt filtriert, unter Erhalt einer Lösung von im wesentlichen Hydroxylammoniumsalz und eines Filterrückstandes, enthaltend im wesentlichen eine Mischung aus Hydrierkatalysator und einer Lösung von im wesentlichen Hydroxylammoniumsalz, und
(b) in einem zweiten Schritt den Filterrückstand einem weiteren Trennverfahren zur Anreicherung des Hydrierkatalysators unterwirft, unter Erhalt einer Mischung, enthaltend einen höheren Gehalt an Hydrierkatalysator als der Filterrückstand und einer Mischung, enthaltend einen niedrigeren Gehalt an Hydrierkatalysator als der Filterrückstand.

## Claims

1. A process for the preparation of hydroxylammonium salts by catalytic reduction of nitrogen monoxide using hydrogen in the presence of a hydrogenation catalyst, which comprises
(a) in a first step, filtering the reaction mixture obtained after the reaction, giving a solution of essentially hydroxylammonium salt and a filter residue essentially comprising a mixture of hydrogenation catalyst and a solution of essentially hydroxylammonium salt, and
(b) in a second step, subjecting the filter residue to sedimentation in order to concentrate the hydrogenation catalyst, giving a mixture having a higher content of hydrogenation catalyst than the filter residue and a mixture having a lower content of hydrogenation catalyst than the filter residue.

2. A process as claimed in claim 1, wherein the mixture from step (b) having a lower content of hydrogenation catalyst essentially comprises hydroxylammonium salt.

3. A process as claimed in claim 1 or 2, wherein the mixture from step (b) having a lower content of hydrogenation catalyst is combined, before the filtration, with the reaction mixture obtained after the reaction.

4. A process as claimed in any of claims 1 to 3, wherein the mixture from step (b) having a higher content of hydrogenation catalyst is employed for the preparation of hydroxylammonium salts.

5. A process as claimed in claim 4, wherein the mixture is employed at the beginning of the reaction.

6. A process as claimed in any of claims 1 to 5, wherein the hydroxylammonium salt is hydroxylammonium sulfate.

## Revendications

1. Procédé pour préparer des sels d'hydroxylammonium par réduction catalytique de monoxyde de carbone avec de l'hydrogène en présence d'un catalyseur d'hydrogénation, caractérisé en ce que
(a) on filtre dans une première étape le mélange réactionnel obtenu après la réaction, pour obtenir une solution constituée essentiellement d'un sel d'hydroxylammonium et un résidu de filtration, contenant pour l'essentiel un mélange du catalyseur d'hydrogénation et d'une solution essentiellement du sel d'hydroxylammonium, et
(b) dans une deuxième étape, on soumet le résidu de filtration à une sédimentation pour enrichir le catalyseur d'hydrogénation, pour obtenir un mélange ayant une teneur en le catalyseur d'hydrogénation plus grande que le résidu de filtration, ainsi qu'un mélange ayant une teneur en le catalyseur d'hydrogénation plus faible que le résidu de filtration.

2. Procédé selon la revendication 1, caractérisé en ce que le mélange ayant une faible teneur en le catalyseur d'hydrogénation, obtenu dans l'étape (b), contient essentiellement un sel d'hydroxylammonium.

3. Procédé selon la revendication 1 ou 2, caractérisé en ce qu'on combine, avant la filtration, le mélange ayant une faible teneur en le catalyseur d'hydrogénation, obtenu dans l'étape (b), et le mélange réactionnel obtenu après la réaction.

4. Procédé selon les revendications 1 à 3, caractérisé en ce que le mélange de l'étape (b), ayant une haute teneur en le catalyseur d'hydrogénation, est utilisé pour préparer des sels d'hydroxylammonium.

5. Procédé selon la revendication 4, caractérisé en ce qu'on utilise le mélange au début de la réaction.

6. Procédé selon les revendications 1 à 5, caractérisé en ce que le sel d'hydroxylammonium est le sulfate d'hydroxylammonium.
